# EUROPÄISCHE PATENTSCHRIFT

(11) **EP 2 029 426 B1**
(45) Veröffentlichungstag und Bekanntmachung des Hinweises auf die Patenterteilung: **10.04.2013**
(21) Anmeldenummer: 07725701.2
(22) Anmeldetag: 31.05.2007
(51) Int. Cl.: B63H 9/02

(54) **MAGNUSROTOR UND VERFAHREN ZU DESSEN BETRIEB**
MAGNUS ROTOR AND METHOD FOR THE OPERATION THEREOF
ROTOR A EFFET MAGNUS ET PROCEDE DE FONCTIONNEMENT DE CELUI-CI

(30) Priorität: 31.05.2006 DE 102006025732
(43) Veröffentlichungstag der Anmeldung: 04.03.2009
(73) Patentinhaber: Wobben Properties GmbH, 26605 Aurich (DE)
(72) Erfinder: WOBBEN, Aloys, 26607 Aurich (DE); ROHDEN, Rolf, 26607 Aurich (DE)
(74) Vertreter: Eisenführ, Speiser & Partner
(86) Internationale Anmeldenummer: PCT/EP2007/004816
(87) Internationale Veröffentlichungsnummer: WO 2007/137844

(56) Entgegenhaltungen:
- AT-B- 110 303
- DE-A1- 2 430 630
- DE-A1-102005 028 447
- GB-A- 2 187 154
- GB-A- 2 332 891
- RISCH HELMUT; BERTHOLD JOCHEN: "Windschiffe" 1988, VEB VERLAG TECHNIK , BERLIN, DD , XP002475509 in der Anmeldung erwähnt Abbildungen 25,32,33,100 Seite 25, mittlere Spalte, Zeile 22 - Zeile 31 Seite 24, linke Spalte, Zeile 47 - Seite 25, mittlere Spalte, Zeile 5 Seite 62, rechte Spalte, Zeile 20 - Seite 63, mittlere Spalte, Zeile 25
- RIZZO FRANK: "The Flettner rotor ship in the light of the Kutta-Jukowski theory and of experimental results" LANGLEY MEMORIAL AERONAUT LAB - NACA TECHNICAL NOTE, Nr. 228, Oktober 1925 (1925-10), Seiten 1-29, XP007904471 Washington DC, US
- SHIPBUILDING: "Rotosail to enter commercial service on 445 dwt ship" SCHIFF UND HAFEN, SEEHAFEN-VERLAG, HAMBURG, DE, Bd. 7, Nr. 37, Juli 1985 (1985-07), Seiten 34-35, XP002079444 ISSN: 1436-8498

## Beschreibung

Die vorliegende Erfindung betrifft einen Magnusrotor, mit einem Antrieb und einer Steuerung, welche den Antrieb derart steuert, dass der Magnusrotor eine Umfangsgeschwindigkeit erreicht, die um einen Faktor λ (Schnelilaufzahl) größer als die mittlere Windgeschwindigkeit ist. Weiterhin betrifft die vorliegende Erfindung ein Verfahren zum Betrieb eines Magnusrotors mit einem Antrieb, welcher den Magnusrotor in Rotation versetzt, und eine Steuerung, sowie ein Schiff.

Magnusrotoren sind im Stand der Technik bekannt. Insbesondere als Schiffsantriebe sind sie auch unter dem Begriff Flettner-Rotor bekannt geworden und in dem Buch "Die Segelmaschine" von Klaus D. Wagner, Ernst Kabel Verlag GmbH, Hamburg, 1991, ist die Ausrüstung von Schiffen mit einem solchen Flettner-Rotor oder Magnusrotor beschrieben. Bereits in diesem Buch wird eine Schnelllaufzahl (= λ), als das Verhältnis von Umfangsgeschwindigkeit zu der Geschwindigkeit des anströmenden Windes, mit Vier angegeben (vergl. "Die Segelmaschine", a. a. O., Seite 65, Zeile 3). Bei dieser Schnelllaufzahl wird ein Auftriebsbeiwert in der Größenordnung von Zehn erreicht (in dem angegebenen Buch ist von einem Wert von Neun die Rede).

Als allgemeiner Stand der Technik sei auf die folgenden Dokumente verwiesen: DE 10 2005 028 447 A1, DE-Buch: "Windschiffe" von Helmut Risch, Jochen Bertholdt, VEB Verlag Technik, Berlin 1988, S. 62/63, DE 24 30 630 A1, US 4,398,895, DE 692 18 428 T2, DE 103 34 481 A1, DE 29 08 159 A1 und DE 24 47 861 A1.

Das Dokument GB 2 187 154 wird als nächstliegender Stand der Technik angesehen und zeigt einen Magnusrotor mit einem Antrieb und einer Steuerung gemäβ der Präambel des unabhängigen Anspruchs 1.

AT 110 303 zeigt einen Magnusrotor mit einem Antrieb und einer Steuerung, sowie drei am unteren Außenumfang des Magnusrotors anliegende Führungsrollen.

Aufgabe der vorliegenden Erfindung ist es, den Magnusrotor in seiner Wirkung besser auszunutzen, als dies im Stand der Technik geschieht.

Dies wird bei einem Magnusrotor der eingangs genannten Art dadurch erreicht, dass die Steuerung dazu ausgestaltet ist, den Antrieb so zu steuern, dass eine Schnelllaufzahl im Bereich von 5 bis 20 erhalten wird, wobei die Steuerung dazu ausgestaltet ist, die Schnelllaufzahl aus einer mittleren, über ein vorgegebenes Zeitintervall ermittelten Windgeschwindigkeit abzuleiten.

Dabei liegt der vorliegenden Erfindung die Erkenntnis zugrunde, dass die Annahme, oberhalb einer Schnelllaufzahl von Vier keine signifikante und vor allen Dingen in Relation zu der aufzuwendenden Antriebsleistung stehende Steigerung des Auftriebsbeiwertes mehr gäbe, auf einem technischen Vorurteil basiert. Es konnte empirisch festgestellt werden, dass eine Steigerung der Schnelllaufzahl zu einem signifikant höheren Auftriebsbeiwert führt. Entsprechend ergibt sich auch eine höhere Leistung des Magnusrotors.

Erfindungsgemäβ wird 5 ≤ Shneillaufzahl λ ≤ 20 verwirklicht und besonders bevorzugt, hier nicht beansprucht, ist 5 ≤ Schnelllaufzahl λ ≤ 10. Bei einem Betrieb des Magnusrotors in diesem Bereich stehen der erreichte Auftriebsbeiwert einerseits sowie die erforderliche Antriebsenergie und die Beanspruchungen des Magnusrotors andererseits in einem besonders günstigen Verhältnis zueinander.

In einer bevorzugten Ausführungsform ist im Inneren des Magnusrotors ein Träger angeordnet, welcher den Magnusrotor unter Vermittlung durch eine Lagerung trägt. Damit bleibt der Magnusrotor außen aerodynamisch sauber und gleichzeitig wird der Träger und auch die Lagerung vor Witterungseinflüssen geschützt.

Erfindungsgemäβ sind wenigstens drei am unteren Außenumfang angeordnete Führungsrollen vorgesehen, welche spielfrei am Magnusrotor anliegen. Besonders bevorzugt sind gleichmäßig beabstandete Führungsrollen. Durch diese Führungsrollen wird sichergestellt, dass unabhängig von der Höhe des Trägers im Inneren des Magnusrotors und der damit verbundenen Höhe der Lagerung der Magnusrotor keine der Rotation überlagerten schlagenden Bewegungen ausführen kann. So wird einerseits der Magnusrotor gleichmäßig geführt und andererseits wird die Lagerung nicht mit aus einer eventuellen Auslenkung des Rotors resultierenden Momenten beaufschlagt. Dies wiederum kommt der Lebensdauer der Lagerung zu Gute.

Um die Geräuschbildung der auf dem Magnusrotor laufenden Führungsrollen zu verringern oder sogar ganz zu beseitigen weist jede Führungsrolle auf ihrer äußeren Umfangsfläche eine elastische Beschichtung auf. Diese elastische Beschichtung kann z. B. eine Hartgummimischung, ein Kunststoff oder eine anderes geeignetes Material sein, welches einerseits das Rollgeräusch zwischen Führungsrolle und Magnusrotor verringert oder unterdrückt und andererseits möglichst geringen Verschleiß aufweist.

Alternativ oder ergänzend ist jede Führungsrolle schwingungsgedämpft gelagert. Dabei kann die Schwingungsdämpfung durch Gummidämpfer erreicht werden. Als Alternative zur elastisch beschichteten Führungsrolle kann die schwingungsgedämpfte Lagerung den überwiegenden Geräuschanteil beseitigen, während eine optimale Geräuschbeseitigung durch eine Kombination von elastisch beschichteter Führungsrolle und schwingungsgedämpfter Lagerung der Führungsrolle erreicht wird.

Da die Führungsrollen ständig auf dem unteren Außenumfang des Magnusrotors abrollen, wird dort ein entsprechender Verschleiß auftreten. Eine verschlissene Führungsrolle kann ausgewechselt werden. Um nicht irgendwann einen durch die Führungsrollen verschlissenen Magnusrotor auswechseln zu müssen, ist am unteren Außenumfang des Magnusrotors eine Führungsbahn vorgesehen, auf welcher die Führungsrollen abrollen. Diese Führungsbahn wird bevorzugt durch segmentierte Stahlbleche gebildet, die bei Bedarf segmentweise ausgetauscht werden können. Auf dies Weise kann die Führung des Magnusrotors leicht instand gehalten werden und der Magnusrotor selbst ist keinem Verschleiß durch die Führungsrollen oder auch Beschädigungen durch Fremdkörper zwischen Führungsbahn und Führungsrollen unterworfen.

In einer besonders vorteilhaften Weiterbildung wird der Magnusrotor angetrieben durch einen Antriebsriemen, der ein vorgegebenes Maß am unteren Außenumfang des Magnusrotors anliegt. Das vorgegebene Maß kann entsprechend den Anforderungen z. B. π/2 oder auch 2 π/3 sein. Bei diesem Antrieb erfolgt die Krafteinleitung nicht nur über einzelne Zahnflanken eines Ritzels sondern über die gesamte Berührungsfläche zwischen dem Magnusrotor und dem Antriebsriemen. Dies ist erheblich weniger störungsanfällig als konventionelle Antriebe und die einzelnen Antriebskomponenten können bei Bedarf problemlos ausgetauscht werden. Weiterhin weist z. B. der Magnusrotor selbst keinen Zahnkranz auf, der beschädigt werden könnte und dann repariert werden müsste. Um den Magnusrotor hier unanfällig gegen Verschleiß zu machen, ist wenigstens der Bereich des unteren Außenumfangs des Magnusrotors, in dem der Antriebsriemen am Magnusrotor anliegt, aus Stahl.

Der Antrieb selber wird vorzugsweise durch eine Führung des Antriebsriemens über drei Rollen verwirklicht, von denen wenigstens eine angetrieben ist. Von dieser angetriebenen Rolle wird die Kraft dann über den Riemen, der sich an den Außenumfang des Magnusrotors anschmiegt, auf den Magnusrotor selbst übertragen.

Um Längenänderungen des Antriebsriemens, z. B. in Folge thermischer Einflüsse, und damit einhergehenden Änderungen der Spannung des Antriebsriemens, entgegenwirken und auch eine Längung des Antriebsriemens durch die einwirkenden Antriebskräfte ausgleichen zu können, ist besonders bevorzugt eine in Radialrichtung des Magnusrotors verstellbare Spannrolle vorgesehen. Durch die Verstellung der Spannrolle kann so die Riemenspannung und damit auch die Spannung, mit welcher sich der Antriebsriemen an den Magnusrotor anschmiegt, beeinflusst werden. Dem Fachmann ist vollkommen klar, dass diese Verstellung manuell oder unter gleichzeitiger Erfassung der Spannung des Antriebsriemens auch selbsttätig unter Verwendung einer motorischen Verstellung der Spannrolle erfolgen kann.

In einer bevorzugten Weiterbildung der vorliegenden Erfindung ist eine Abdeckung vorgesehen, welcher den unteren Umfang des Magnusrotors wenigstens teilweise umschließt und die Rollen zur Führung des Antriebsriemens sowie den Riemen selbst und die Führungsrollen abdeckt. Auf diese Weise kann einerseits verhindert werden, dass Fremdkörper in den Antrieb und die Führungsrollen gelangen. Andererseits wird somit eine Gefahrenquelle für das Bedienungspersonal beseitigt, weil durch eine solche Abdeckung auch ein unbeabsichtigter Kontakt mit der Antriebseinrichtung sicher verhindert werden kann.

Besonders bevorzugt ist die Abdeckung entsprechend den darunter angeordneten Komponenten segmentiert. Um Zugang zu einer Führungsrolle zu erhalten, muss demnach nur das entsprechende Segment der Abdeckung entfernt werden, nicht aber die gesamte Abdeckung. Das spart einerseits Zeit und Aufwand und hält andererseits die Sicherheit aufrecht, denn die übrigen Teile, wie z. B. der Antrieb und die Rollen für den Antriebsriemen bleiben weiterhin abgedeckt.

Um einen sicheren Betrieb des Magnusrotors zu erreichen, ist die erste Eigenfrequenz des Magnusrotors größer als die höchste Drehzahl des Magnusrotors. Dadurch wird sichergestellt, dass die Drehzahl des Magnusrotors in keinem Fall seine erste Eigenfrequenz erreichen kann und den Magnusrotor so in Resonanzschwingungen versetzen kann. Dabei ist dem Fachmann klar, dass die erste Eigenfrequenz mit zunehmender Biegesteifigkeit steigt und mit zunehmender Masse sinkt. Der Fachmann ist daher in der Lage, den Magnusrotor so zu dimensionieren und auszulegen, dass seine erste Eigenfrequenz den gewünschten Wert erhält.

Entsprechend wird der Magnusrotor gemäß einem Verfahren gesteuert, nach dem er mit einer Drehzahl betrieben wird, die kleiner als seine erste Eigenfrequenz ist. Auch durch dieses Verfahren wird also der Betrieb des Magnusrotors mit einer Drehzahl unterhalb seiner ersten Eigenfrequenz sichergestellt.

Das erfindungsgemäße Verfahren zum Betrieb des Magnusrotors ist so ausgebildet, dass der Antrieb derart gesteuert wird, dass sich eine Schnelllaufzahl im Bereich von 5 bis 20 und besonders bevorzugt, hier nicht beansprucht, im Bereich von 5 bis 10 einstellt, wobei die Schnelllaufzahl aus einer mittleren Windgeschwindigkeit abgeleitet wird, welche über ein vorgegebenes Zeitintervall ermittelt wird. Somit trägt auch das erfindungsgemäße Verfahren der empirisch gewonnen Erkenntnis Rechnung, dass bei höheren Schnelllaufzahlen entgegen dem herrschenden technischen Vorurteil auch signifikant höhere Auftriebsbeiwerte und damit größere resultierende Kräfte erreicht werden.

In einer besonders bevorzugten Ausgestaltung der Erfindung ist ein Schiff vorgesehen, welches mit wenigstens einem erfindungsgemäßen Magnusrotor zum Erzeugen von Antriebskraft ausgestattet ist.

Nachfolgend wir die Erfindung anhand einer Ausführungsform näher beschrieben. Dabei zeigen:
- Fig. 1: eine vereinfachte Darstellung des gesamten Systems;
- Fig. 2: eine perspektivische Darstellung des Magnusrotors;
- Fig. 3: eine vereinfachte Seitenansicht des Magnusrotors;
- Fig. 4: eine detaillierte Darstellung des Antriebs und der Führung des Magnusrotors;
- Fig. 5: eine Detailansicht des unteren Bereichs des Magnusrotors;
- Fig. 6: eine perspektivische Darstellung einer Führungsrolle und deren Lagerung;
- Fig. 7: eine Schnittdarstellung von Führungsrolle und Lagerung; und
- Fig. 8: eine vereinfachte Darstellung der Abdeckung des Antriebs und der Führungsrollen.

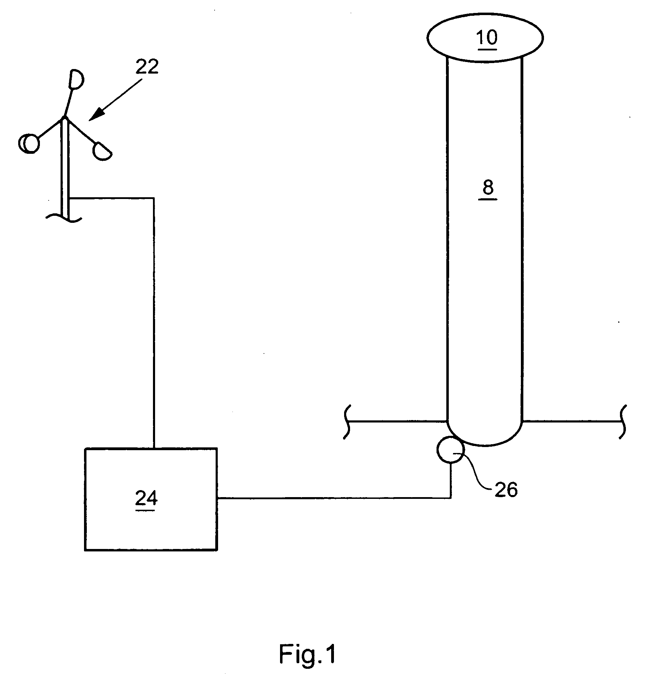

Figur 1 zeigt einen Magnusrotor 8 mit einer Endplatte 10. Diese Endplatte verbessert den Wirkungsgrad des Magnusrotors 8, ist aber im Stand der Technik hinreichend bekannt.

Der Magnusrotor 8 wird mittels eines Antriebs 26 angetrieben, der von einer Steuerung 24 derart gesteuert wird, dass die Umfangsgeschwindigkeit des Magnusrotors 8 ein Vielfaches der Windgeschwindigkeit ist.

Dazu wird z. B. mittels eines Anemometers 22 die Windgeschwindigkeit gemessen und der Steuerung 24 zugeführt, welche dann wiederum den Antrieb 26 entsprechend steuert. Die sich einstellende Drehzahl ist abhängig vom Durchmesser des Magnusrotors 8 und kann ohne Weiteres Werte in der Größenordnung von 400 oder 500 Umdrehungen pro Minute erreichen.

Im erfindungsgemäßen praktischen Betrieb wird die Drehzahl dabei ausgehend von einer mittleren Windgeschwindigkeit eingestellt. Diese kann in bekannter Weise als 10 Minuten-Mittelwert, aber natürlich auch über einen anderen Zeitraum ermittelt werden. Die Steuerung anhand von Mittelwerten hat einerseits den Vorteil, dass die Häufigkeit von Regelungseingriffen sich in Grenzen hält. Andererseits kommt eine stabilisierende Wirkung hinzu. Steigt nämlich bei gleichbleibender Drehzahl des Magnusrotors 8 die Windgeschwindigkeit, z. B. in Folge einer positiven Bö, kurzzeitig an, verringert sich automatisch die Schnelllaufzahl und damit der Auftriebsbeiwert des Magnusrotors; die am Magnusrotor 8 entstehende Kraft steigt also nicht mit der Windgeschwindigkeit an. Entsprechend steigt die Schnelllaufzahl bei einer negativen Bö, also einer kurzfristig sinkenden Windgeschwindigkeit; die entstehende Kraft wird also wegen des zunehmenden Auftriebsbeiwertes nicht nennenswert verringert. Bei sich ständig verändernden Windgeschwindigkeiten führt also eine gleichförmige Drehzahl des Magnusrotors zu einer Verstetigung der resultierenden Kraft.

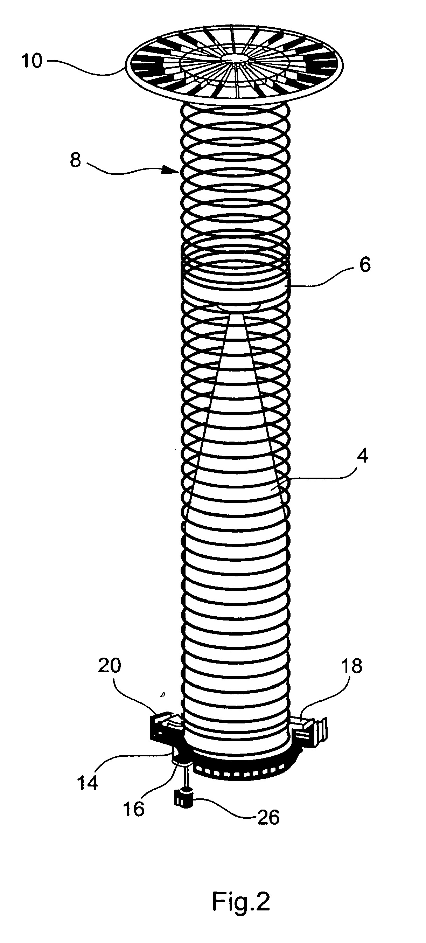

Die perspektivische Darstellung in Figur 2 zeigt den erfindungsgemäßen Magnusrotor 8 mit einer an seinem oberen Ende angebrachten, hier nicht beanspruchten Endplatte 10. Soweit der Magnusrotor 8 auf einer (nicht dargestellten) Grundplatte wie z. B. dem Deck eines Schiffes oder Ähnlichem angebracht ist, ist eine entsprechende Endplatte an seinem unterem Ende nicht erforderlich, da diese von der Platte bzw. dem Deck selbst gebildet wird. Der Magnusrotor 8 wird von einem Träger 4 getragen, der im Inneren des Magnusrotors 8 angeordnet ist und auf dem sich der Magnusrotor 8 unter Vermittlung durch eine Lagerung 6 dreht. Diese Lagerung kann ein bekanntes Wälzlager oder jede andere geeignete Ausführung eines Lagers sein. Am unteren Umfangsrand des Magnusrotors 8 ist die Antriebsvorrichtung dargestellt.

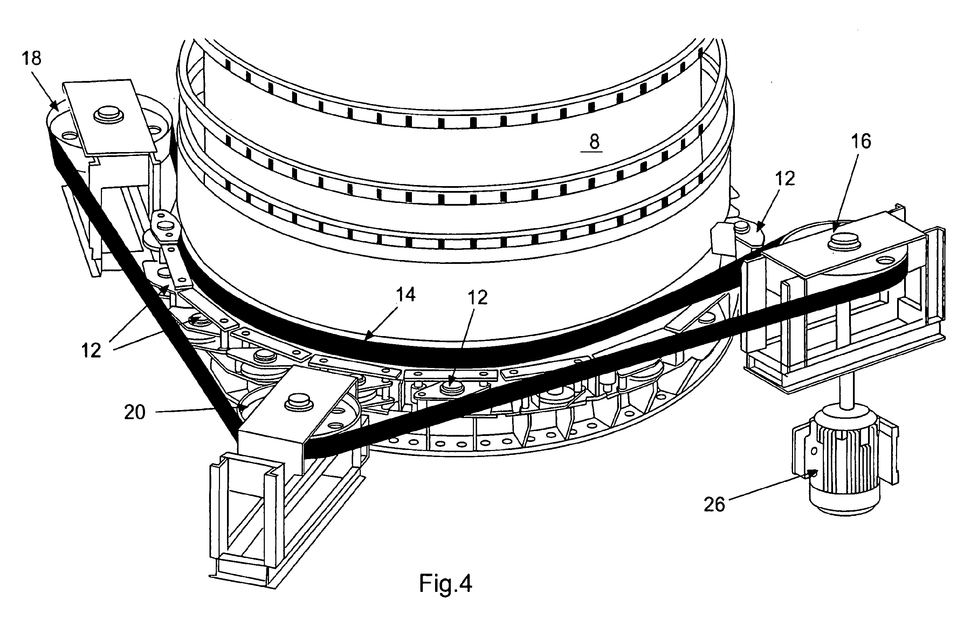

Die Antriebskraft wird von einem Antrieb 26 aufgebracht, der eine Rolle 16 antreibt. Um diese Rolle 16 herum läuft ein Antriebsriemen 14 und wird weiterhin über eine Umlenkrolle 18 und eine Spannrolle 20 geführt. Da diese drei Rollen 16, 18, 20 um den Mittelpunkt des Magnusrotors 8 herum angeordnet sind, schmiegt sich der Antriebsriemen 14 entlang eines vorgegebenen Abschnittes an den äußeren Umfang des Magnusrotors an und nimmt diesen durch Reibung mit. Die Bewegung des Antriebsriemens 14 durch den Antrieb 26 wird somit auf den Magnusrotor 8 übertragen und Letzterer so in Rotation versetzt. Dieser Antrieb wird noch detaillierter anhand von Figur 4 dargelegt.

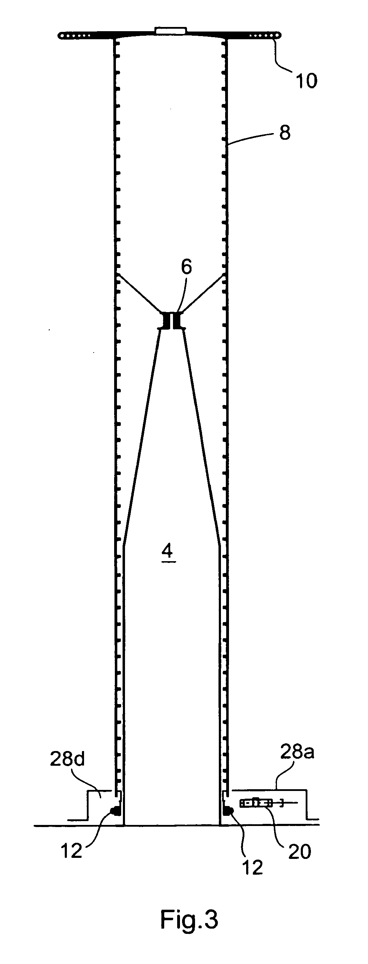

Figur 3 zeigt eine vereinfachte Schnittdarstellung des erfindunasgemäßen Magnusrotors 8 mit dem innenliegenden Träger 4, der Lagerung 6, der hier nicht beanspruchten endplatte 10 sowie der Spannrolle 20. Weiterhin sind in dieser Figur Führungsrollen 12 sowie Abdeckungen 28a, 28d dargestellt.

Die Abdeckungen 28a und 28d decken den unteren Umfangsrand des Magnusrotors, die Führungsrollen 12 und auch den Antrieb, hier vereinfacht dargestellt durch die Spannrolle 20, ab und verhindern so einerseits, dass Fremdkörper in den Antrieb bzw. die Führungsrollen 12 gelangen und dass sich andererseits Bedienungspersonal an offenliegenden, rotierenden Teilen verletzen kann.

In Figur 4 sind Einzelheiten des Antriebs und der Führung des Magnusrotors 8 zu erkennen. Am unteren Umfangsrand des Magnusrotors 8 befinden sich Führungsrollen 12. Diese Führungsrollen 12 sind über den gesamten Umfang des Magnusrotors 8 verteilt und liegen spielfrei daran an. Selbst wenn sich also z. B. durch eine Windböe und die relativ hoch angeordnete Lagerung (vergl. z. B. Figur 3) ein Kippmoment ergeben sollte, kann dies nicht zu einer Schlagbewegung des Magnusrotors 8 führen, da die Führungsrollen 12 dieses sicher verhindern. Dadurch ist sichergestellt, dass der Magnusrotor 8, stets eine präzise Rotation ausführt.

Weiterhin ist in dieser Figur gut der Antriebsriemen 14 zu erkennen, der sich ebenfalls im unteren Bereich des Magnusrotors 8 an seinen Außenumfang anschmiegt. Je nach Position der Rollen 16, 18, 20, über welche der Antriebsriemen 14 läuft, schmiegt sich dieser Antriebsriemen 14 über ein Bogenmaß von z. B. π/2, 2π/3 oder sogar π an die Oberfläche des Magnusrotors an und überträgt auf diesem Weg mittels Reibung die Antriebskraft auf den Magnusrotor 8.

Der Antriebsriemen 14 seinerseits wird durch eine Antriebsrolle 16 in Bewegung versetzt, welche von einem Antrieb 26, z. B. einem Elektromotor, mit der entsprechenden Kraft beaufschlagt wird. Von der Antriebsrolle 16 wird der Antriebsriemen 14 am Magnusrotor 8 entlang zu einer Umlenkrolle 18, von dort weiter zu einer Spannrolle 20 und wieder zurück zu der Antriebsrolle 16 geführt. Es handelt sich im vorliegenden Beispiel also um einen endlosen Antriebsriemen.

Die Spannrolle 20 ist in dieser Figur gut als in ihrer Position in radialer Richtung des Magnusrotors 8 verstellbar zu erkennen. Dadurch kann der Antriebsriemen 14 in seiner Spannung eingestellt werden, so dass z. B. Längenänderungen durch thermische Einflüsse, aber auch durch mechanische Beanspruchung und Verschleiß, ausgeglichen werden können.

Im Stand der Technik sind auch automatische Systeme bekannt, bei denen ein (in der Figur nicht dargestellter) Spannungsaufnehmer selbsttätig die Spannung des Antriebsriemens 14 erfasst und über eine geeignete Steuerung einen Verstellantrieb (ebenfalls nicht dargestellt) ansteuert, der die Spannrolle 20 in geeigneter Weise verstellt.

Ein wesentlicher Vorteil dieses Antriebssystems liegt in seiner guten Zugänglichkeit und in seinem einfachen Aufbau. Dadurch können Störungen mit geringem Aufwand behoben werden. So befinden sich am Magnusrotor 8 keinerlei Teile die verschleißen oder beschädigt werden können.

Auch der Austausch von Führungsrollen 12, die gut erkennbar ebenfalls von außen zugänglich sind, ist damit problemlos möglich. Die Wartung wird ebenfalls erleichtert, weil eine Sichtkontrolle sogar im laufenden Betrieb durchgeführt werden kann, da das Innere des Magnusrotors 8 nicht betreten werden muss.

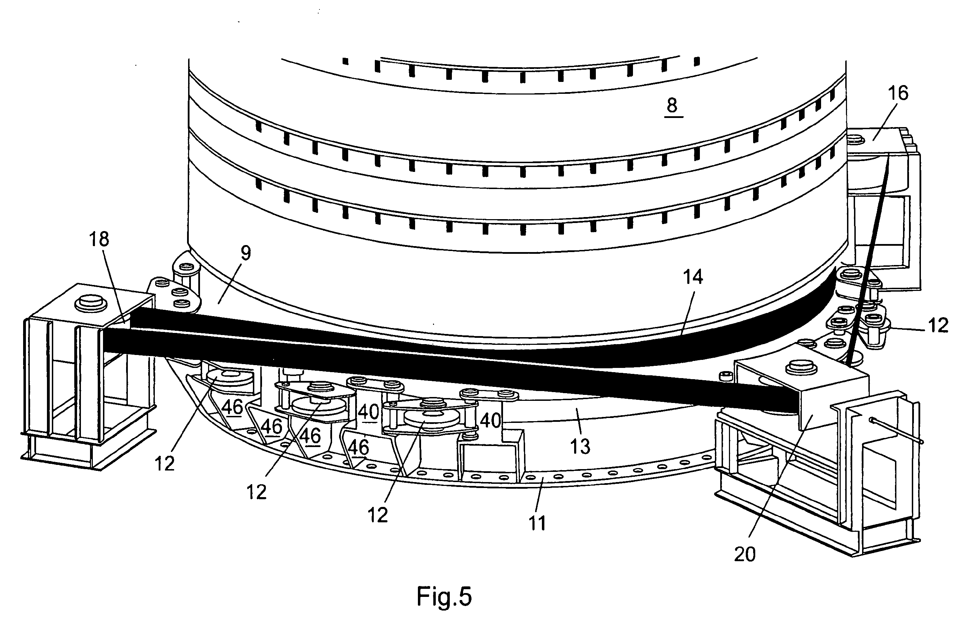

Figur 5 zeigt detailliert die Anordnung des Antriebsriemens 14 und der Führungsrollen 12 am unteren Außenumfang des Magnusrotors 8. Während der Magnusrotor 8 aus Aluminium hergestellt ist, um seine Masse gering zu halten, ist in seinem unteren Bereich ein Antriebsbereich 9 aus Stahl vorgesehen. In diesem Antriebsbereich 9 liegt der Antriebsriemen 14 am Magnusrotor 8 an und überträgt die Antriebskräfte auf den Magnusrotor 8. Während aber Aluminium ein relativ weiches Material ist und damit einem höheren Verschleiß unterworfen ist, ist dies bei Stahl nicht der Fall. Durch diesen Aufbau wird ein verschleißarmer Antriebsbereich geschaffen, der einen zuverlässigen Antrieb des Magnusrotors ermöglicht.

In diesem Antriebsbereich 9 liegen auch die Führungsrollen 12 am Magnusrotor 8 an. Da diese Führungsrollen 12 während der gesamten Betriebszeit des Magnusrotors 8 auf dem unteren Außenumfang des Magnusrotors 8 abrollen ist auch hier ein gewissen Verschleiß zu erwarten. Während die Führungsrollen 12 selbst von außen zugänglich sind und damit leicht ausgetauscht werden können, darf am Magnusrotor 8 selbst kein Verschleiß entstehen, der dessen Austausch erforderlich macht, da dies mit einem außerordentlichen hohen Aufwand verbunden ist.

Deshalb ist im Antriebsbereich 9 eine Führungsbahn 13 vorgesehen, die aus segmentierten Stahlblechen gebildet ist, welche wiederum auf dem Antriebsbereich 9 befestigt sind. Die Führungsrollen 12 rollen auf dieser Führungsbahn 13 ab. Ist nun die Verschleißgrenze der Führungsbahn 13 erreicht, können je nach Art und Umfang des Verschleiß' einzelne Segmente der Führungsbahn 13 ausgetauscht werden. Auf diese Weise kann der Magnusrotor 8 auch bei Verschleiß der Führungsbahn 13 auf einfache Weise in betriebsbereitem Zustand gehalten werden.

Selbst wenn ein Fremdkörper von Außen zwischen Führungsbahn 13 und Führungsrolle 12 gerät und dadurch eine Beschädigung entsteht, kann das betroffene Segment der Führungsbahn 13 und die betroffene Führungsrolle 12 leicht ausgetauscht werden.

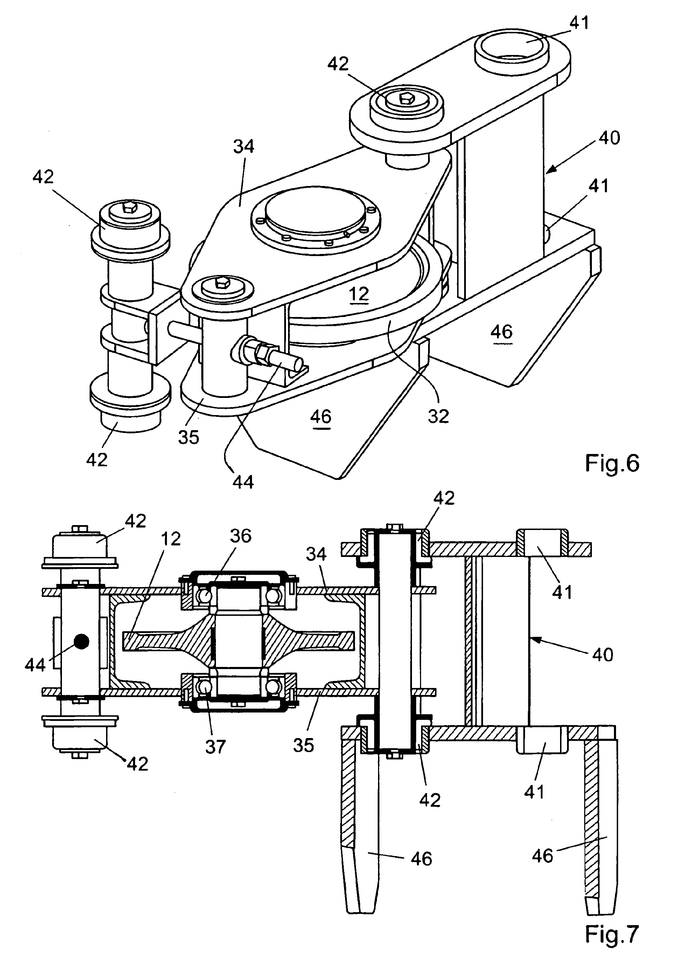

Figur 6 zeigt in einer perspektivischen Darstellung eine Ausführungsform der Führungsrolle 12 mit ihrer dazu gehörigen Halterung. Die Führungsrolle 12 weist in diesem Beispiel an ihrer äußeren Umfangsfläche eine elastische Beschichtung 32 auf. Diese elastische Beschichtung 32 läuft auf der Oberfläche des Magnusrotors und dort auf der Führungsbahn (vgl. Bezugszeichen 13 in Figur 5). Durch die elastische Beschichtung 32 wird sowohl die Geräuschentwicklung während des Betriebs des Magnusrotors durch das Ablaufen der Rollen 12 auf seinem Außenumfang wie auch der Verschleiß am Magnusrotor deutlich verringert.

Die Rolle 12 ist zwischen einer oberen Halteplatte 34 und einer unteren Halteplatte 35 drehbar gelagert. Die die Rolle 12 und die Halteplatten 34, 35 umfassende Baugruppe ist über Gummidämpfer 42 in einer Halterung 40 schwenkbar gelagert. Diese Halterung 40 wiederum wird durch Befestigungsplatten 46 mit dem Unterbau des Magnusrotors 8 verbunden.

Die Baugruppe mit der Führungsrolle 12 und der oberen und unteren Halteplatte 34, 35 ist in dieser Figur an ihrer rechten Seite auf diese Weise in der Halterung 40 angeordnet. An der linken Seite der Baugruppe befindet sich eine Vorspanngewindestange 44, welche mit weiteren Gummidämpfern 42 verbunden ist. Diese weiteren Gummidämpfer 42 werden in das entsprechende Dämpferlager 41 der benachbarten Halterung 40 eingesetzt, sodass sich eine fortlaufende Kette aus Halterungen 40 mit daran angebrachten Führungsrollen 12 ergibt, die den unteren Außenumfang des Magnusrotors 8 vollständig umschließt.

Mittels der Vorspanngewindestange 44 kann der Anpressdruck eingestellt werden, mit welchem die Führungsrolle 12 an dem Magnusrotor 8 und dort an der Führungsbahn 13 anliegt. Die Gummidämpfer 42 bewirken bei diesem Aufbau einerseits in gewissen Grenzen eine elastische Lagerung der Führungsrolle 12 und eine akustische Entkoppelung von Führungsrolle 12 und Halterung 40, so dass auch auf diesem Wege eine Geräuschausbreitung wenigstens verringert wird.

Die Halterung 40 wird über Befestigungsplatten 46 mit dem Unterbau verbunden. Dies ist in Figur 5 gut zu erkennen. Dort (in Figur 5) ist der untere Flansch 11 des Unterbau des Magnusrotors dargestellt, auf dem die Befestigungsplatten 46 mit ihrer Unterseite angebracht sind, während die von dem Betrachter fort weisende senkrechte hinteren Seiten der Befestigungsplatten 46 am untersten Umfangsgrand des Unterbaus des Magnusrotors befestigt werden. Diese Befestigung kann z. B. durch eine Schweißverbindung erfolgen.

In dieser Figur 5 ist auch die Anordnung der Führungsrollen 12 zwischen benachbarten Halterungen 40 erkennbar, bei denen die in Figur 6 im linken Teil dargestellten Gummidämpfer in den Dämpferlagern 41 (vgl. Figur 6) der benachbarten Halterung 40 eingesetzt sind.

Figur 7 zeigt eine Schnittdarstellung durch die in Figur 6 gezeigte Anordnung. Abweichend von der Darstellung in Figur 6 ist hier die Führungsrolle 12 allerdings vollständig aus einem Material, vorzugsweise Stahl, gebildet. Diese Führungsrolle 12 ist über ein oberes Lager 36 und ein unteres Lager 37 drehbar zwischen der oberen Halteplatte 34 und der unteren Halteplatte 35 gelagert und diese Baugruppe aus Führungsrolle 12, Halteplatten 34, 35 und Lagern 36, 37 ist wiederum mit Gummidämpfern 42 versehen, die eine Montage der Baugruppe in Haltern 40 ermöglichen, wie dies bereits in der Beschreibung von Figur 6 erläutert wurde. Dabei sind in dieser Figur 7 die Dämpferlager 41 im rechten Teil der Halterung 40 gut erkennbar, in denen die an der rechten Seite des Halters benachbarte (nicht dargestellte) Baugruppe mit Führungsrolle 12, Halteplatten 34, 35 und Lagern 36, 37 in diese in der Figur dargestellten Halterung 40 unter Vermittlung der Gummidämpfer 42 eingesetzt wird.

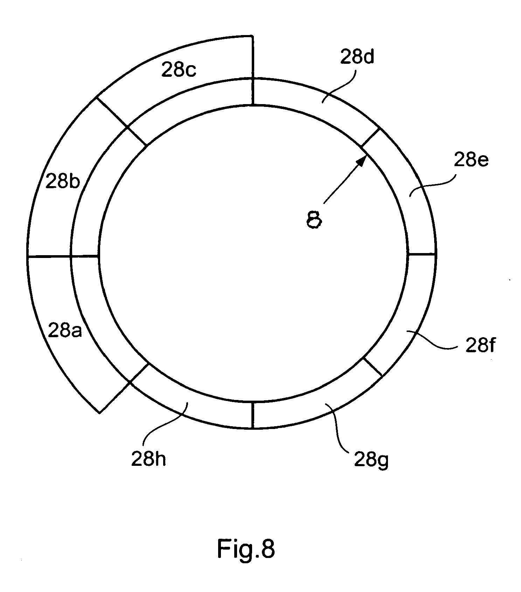

Figur 8 zeigt eine vereinfachte Darstellung der Abdeckung des Antriebs und der Führungsrolle des Magnusrotors 8, allerdings in einer Draufsicht ohne die Endplatte und ohne die Darstellung des Trägers sowie der Lagerung. Um den Außenumfang des Magnusrotors 8 herum, sind Abdeckungen 28a bis 28h angeordnet. Dabei sind die Abdeckungen 28a, 28b und 28c Abdeckungen, unter denen die Rollen sowie der Antriebsriemen angeordnet sind, während die Abdeckungen 28d bis 28h die Führungsrollen 12 abdecken. Durch die Segmentierung muss nicht jedes Mal die gesamte Abdeckung entfernt werden, um Zugang zu einzelnen Teilen des Antriebs- und Führungs-Systems zu erhalten.

## Patentansprüche

1. Magnusrotor (8) mit
einem Antrieb (26) zum Antreiben des Magnusrotors (8) und einer Stauerung (24) zum Steuern des Antriebs (26) derart, dass der Magnuarotor (8) eine Umfangsgeschwindigkeit erreicht, bei der sich eine Schnelllaufzahl im Bereich von 5 bis 20 einstellt, **dadurch gekennzeichnet, dass**
am unteren Außenumfang des Magnusrotors (8) wenigstens drei Führungsrollen (12) angeordnet sind welche spielfrei am Magnusrotor (8) anliegen,
und dass die Steuerung (24) dazu ausgestaltet ist, die Schnelllaufzahl aus einer mittleren, über ein vorgegebenes Zeitintervall ermittelten Windgeschwindigkeit abzuleiten.

2. Magnusrotor nach Anspruch 1, **gekennzeichnet durch** einen Träger (4), welcher im Inneren des Magnusrotors (8) angeordnet ist und den Magnusrotor (8) unter Vermittlung **durch** ein Lager (6) trägt.

3. Magnusrotor nach Anspruch 1 oder 2, wobei die wenigstens drei Führungsrollen (12) gleichmäßig beabstandet am unteren Außenumfang des Magnusrotors (8) angeordnet sind.

4. Magnusrotor nach Anspruch 1, 2 oder 3, **gekennzeichnet durch** eine elastische Beschichtung auf der äußeren Umfangfläche jeder Führungsrolle (12).

5. Magnusrotor nach einem der Ansprüche 1 bis 4, **gekennzeichnet durch** eine schwingungsgedämpfte Lagerung jeder Führungsrolle (12).

6. Magnusrotor nach einem der Ansprüche 1 bis 5, **gekennzeichnet durch** Gummidämpfern (42) zur schwingungsgedämpften Lagerung jeder Führungsrolle (12).

7. Magnusrotor nach einem der Ansprüche 1 bis 6, **gekennzeichnet durch** eine Führungspahn (13) aus segmentierten Stahlblechen am unteren Außenumfang des Magnusrotors (8), wobei die Führungsrollen (12) auf der Führungsbahn (13) abrollen.

8. Magnusrotor nach einem der Ansprüche 1 bis 7, **gekennzeichnet durch** einen Antriebsriemen (14), der ein vorgegebenes Maß am unteren Außenumfang des Magnusrotors (8) anliegt.

9. Magnusrotors nach Anspruch 8, **gekennzeichnet durch** eine Führung des Antriebsriemens (14) über drei Rollen (16, 18, 20), von denen wenigstens eine angebtrieben ist.

10. Magnusrotor nach Anspruch 9, **gekennzeichnet durch** eine in Radialrichtung des Magnusrotors (8) verstellbare Spannrolle (20).

11. Magnusrotor nach Anspruch 10, **gekennzeichnet durch** eine motorische Verstellung der Spannrolle (20),

12. Magnusrotors nach einem der Ansprüche 9 bis 11, **gekennzeichnet durch** eine Abdeckung (28a-28h), welche den unteren Umfang des Magnusrotors (8) wenigstens teilweise umschließt und die Rollen (16, 18, 20) zur Führung des Antriebsriemens (14) sowie den Antriebsriemen (14) selbst und die Führungsrollen (12) abdeckt.

13. Magnusrotor nach Anspruch 12, **gekennzeichnet durch** eine Segmentierung der Abdeckung (28a-28h) entsprechend den darunter angeordneten Komponenten.

14. Magnusrotors nach einem der Ansprüche 1 bis 13, **gekennzeichnet durch** eine erste Eigenfrequenz oberhalb der höchsten Drehzahl des Magnusrotors (8).

15. Verfahren zum Betrieb eines Magnusrotors (8) mit einem Antrieb (26), welcher den Magnusrotors in Rotation versetzt, und einer Steuerung (24), wobei der Antrieb (26) derart gesteuert wird, dass sich eine Schnelllaufzahl im Bereich von 5 bis 20 einstellt,
wobei die Schnelliaufzahl aus einer mittleren Windgeschwindigkeit abgeleitet wird, welche über ein vorgegebenes Zeitintervall ermittelt wird.

16. Verfahren nach Anspruch 15, **dadurch gekennzeichnet, dass** der Magnusrotor (8) mit einer Drehzahl betrieben wird, welche kleiner als die erste Eigenfrequenz des Magnusrotors (8) ist.

17. Schiff, mit wenigstens einem Magnusrotor nach einem der Ansprüche 1 bis 14.

## Claims

1. A Magnus rotor (8) comprising
a drive (26) for driving the Magnus rotor (8), and a controller (24) for controlling the drive (26) in such a way that the Magnus rotor (8) reaches a peripheral speed at which a specific speed in the range of from 5 to 20 is obtained, **characterised in that**
at least three guide rollers (12) are disposed at the lower outer periphery of the Magnus rotor (8), which guide rollers (12) rest against the Magnus rotor (8) without clearance, and that
the controller (24) is configured to derive the specific speed from an average wind speed determined over a predefined time interval.

2. A Magnus rotor according to claim 1, **characterised by** a carrier (4) which is disposed in the interior of the Magnus rotor (8) and carries the Magnus rotor (8) by means of a bearing (6).

3. A Magnus rotor according to claim 1 or 2, wherein the at least three guide rollers (12) are disposed in uniformly spaced relationship at the lower outer periphery of the Magnus rotor (8).

4. A Magnus rotor according to claim 1, 2 or 3, **characterised by** a resilient covering on the outer peripheral surface of each guide roller (12).

5. A Magnus rotor according to any one of claims 1 to 4, **characterised by** an oscillation-damped supporting of each guide roller (12).

6. A Magnus rotor according to any one of claims 1 to 5, **characterised by** rubber dampers (42) for oscillation-damped supporting of each guide roller (12).

7. A Magnus rotor according to any one of claims 1 to 6, **characterised by** a guide track (13) of segmented steel plates at the lower outer periphery of the Magnus rotor (8), the guide rollers (12) rolling on the guide track (13).

8. A Magnus rotor according to any one of claims 1 to 7, **characterised by** a drive belt (14) which rests against the lower outer periphery of the Magnus rotor (8) over a predefined distance.

9. A Magnus rotor according to claim 8, **characterised by** a guiding of the drive belt (14) by way of three rollers (16, 18, 20) of which at least one is driven.

10. A Magnus rotor according to claim 9, **characterised by** a tensioning roller (20) which is displaceable in the radial direction of the Magnus rotor (8).

11. A Magnus rotor according to claim 10, **characterised by** motor-driven displacement of the tensioning roller (20).

12. A Magnus rotor according to any one of claims 9 to 11, **characterised by** a cover (28a-28h) which at least partially surrounds the lower periphery of the Magnus rotor (8) and covers the rollers (16, 18, 20) for guiding the drive belt (14) and also the drive belt (14) itself and the guide rollers (12).

13. A Magnus rotor according to claim 12, **characterised by** a segmentation of the cover (28a-28h) corresponding to the components disposed therebeneath.

14. A Magnus rotor according to any one of claims 1 to 13, **characterised by** a first natural frequency above the highest rotary speed of the Magnus rotor (8).

15. A method for operating a Magnus rotor (8) comprising a drive (26) which sets the Magnus rotor in rotation and a controller (24), wherein the drive (26) is controlled in such a way that a specific speed in the range of from 5 to 20 is obtained,
wherein the specific speed is derived from an average wind speed determined over a predefined time interval.

16. A method according to claim 15, **characterised in that** the Magnus rotor (8) is operated at a rotary speed that is lower than the first natural frequency of the Magnus rotor (8).

17. A ship having at least one Magnus rotor according to any one of claims 1 to 14.

## Revendications

1. Rotor à effet Magnus (8) avec un dispositif d'entraînement (26) pour entraîner le rotor à effet Magnus (8) et avec un dispositif de commande (24) pour commander le dispositif d'entraînement (26) de telle sorte que le rotor à effet Magnus (8) atteint une vitesse périphérique à laquelle un paramètre de rapidité s'installe dans la plage de 5 à 20, **caractérisé en ce qu'**au moins trois galets de guidage (12) qui sont ajustés sans jeu contre le rotor à effet Magnus (8) sont agencés à la périphérie extérieure inférieure du rotor à effet Magnus (8) et **en ce que** le dispositif de commande (24) est conçu pour déduire le paramètre de rapidité d'une vitesse de vent moyenne déterminée sur un intervalle de temps prédéfini.

2. Rotor à effet Magnus selon la revendication 1, **caractérisé par** un support (4) qui est agencé à l'intérieur du rotor à effet Magnus (8) et qui supporte le rotor à effet Magnus (8) par l'intermédiaire d'un palier (6).

3. Rotor à effet Magnus selon la revendication 1 ou 2, tel que les au moins trois galets de guidage (12) sont agencés, régulièrement espacés, sur la périphérie extérieure inférieure du rotor à effet Magnus (8).

4. Rotor à effet Magnus selon la revendication 1, 2 ou 3, **caractérisé par** un revêtement élastique sur la surface périphérique extérieure de chaque galet de guidage (12).

5. Rotor à effet Magnus selon l'une des revendications 1 à 4, caractérisé le fait que chaque galet de guidage (12) est logé de manière à amortir les vibrations.

6. Rotor à effet Magnus selon l'une des revendications 1 à 5, **caractérisé par** des amortisseurs en caoutchouc (42) pour loger chaque galet de guidage (12) de manière à amortir les vibrations.

7. Rotor à effet Magnus selon l'une des revendications 1 à 6, **caractérisé par** une trajectoire de guidage (13) constituée de tôles d'acier segmentées sur la périphérie extérieure inférieure du rotor à effet Magnus (8), les galets de guidage (12) roulant sur la trajectoire de guidage (13).

8. Rotor à effet Magnus selon l'une des revendications 1 à 7, **caractérisé par** une courroie de transmission (14) qui épouse sur une longueur prédéfinie la périphérie extérieure inférieure du rotor à effet Magnus (8).

9. Rotor à effet Magnus selon la revendication 8, **caractérisé par** un guidage de la courroie de transmission (14) par l'intermédiaire de trois rouleaux (16, 18, 20) dont l'un au moins est entraîné.

10. Rotor à effet Magnus selon la revendication 9, **caractérisé par** un rouleau de tension (20) ajustable dans la direction radiale du rotor à effet Magnus (8).

11. Rotor à effet Magnus selon la revendication 10, **caractérisé par** un ajustement motorisé du rouleau de tension (20).

12. Rotor à effet Magnus selon l'une des revendications 9 à 11, **caractérisé par** un couvercle (28a à 28h) qui entoure au moins en partie la périphérie inférieure du rotor à effet Magnus (8) et qui couvre les rouleaux (16, 18, 20) destinés au guidage de la courroie de transmission (14) ainsi que la courroie de transmission (14) elle-même et les galets de guidage (12).

13. Rotor à effet Magnus selon la revendication 12, **caractérisé par** une segmentation du couvercle (28a à 28h) en fonction des composants agencés dessous.

14. Rotor à effet Magnus selon l'une des revendications 1 à 13, **caractérisé par** une première fréquence propre au-dessus de la vitesse de rotation maximale du rotor à effet Magnus (8).

15. Procédé pour faire fonctionner un rotor à effet Magnus (8) avec un dispositif d'entraînement (26) qui met le rotor à effet Magnus en rotation et avec un dispositif de commande (24), le dispositif d'entraînement (26) étant commandé de telle sorte qu'un paramètre de rapidité s'installe dans la plage de 5 à 20, lequel paramètre de rapidité est déduit d'une vitesse de vent moyenne qui est déterminée sur un intervalle de temps prédéfini.

16. Procédé selon la revendication 15, **caractérisé en ce que** l'on fait fonctionner le rotor à effet Magnus (8) avec une vitesse de rotation qui est inférieure à la première fréquence propre du rotor à effet Magnus (8).

17. Bateau comportant au moins un rotor à effet Magnus selon l'une des revendications 1 à 14.
